# EUROPEAN PATENT SPECIFICATION

(11) **EP 1 817 997 B1**
(45) Date of publication and mention of the grant of the patent: **21.10.2009**
(21) Application number: 07380003.9
(22) Date of filing: 09.01.2007
(51) Int. Cl.: A47J 45/07

(54) **Connection system between a body and a handle of a kitchen utensil**
Verbindungssystem zwischen einem Körper und einem Griff eines Küchenwerkzeugs
Système de connexion entre le corps et la poignée d'un appareil de cuisine

(30) Priority: 09.02.2006 ES 200600295
(43) Date of publication of application: 15.08.2007
(73) Proprietor: IEG S.A., 01015 Vitoria (ES)
(72) Inventor: Emparanza Knörr, Andres, 01007 Vitoria (ES)
(74) Representative: Urteaga Simarro, José Antonio

(56) References cited:
- CH-A- 319 514
- DE-A1- 2 340 723
- DE-U1- 29 601 657
- FR-A- 1 172 282
- FR-A1- 2 207 672
- US-A1- 3 878 584

## Description

### Technical field

The invention relates to a connection system between a handle and a body of a kitchen utensil, especially between a handle of any material and a exteriorly-enamelled body of a kitchen utensil.

### Prior art

A kitchen utensil provided with a body and at least one handle can be made in such a way that the handle and the body of the utensil constitute a single piece. Alternatively, the handle and the body of the utensil can be independent pieces which are connected to each other by a specific connection system.

The prior art contains a large number of different connection systems for connecting a handle to a body of a kitchen utensil. For example, a first system applicable to utensils whose body presents an exterior metallic surface is to weld the handle to said exterior metallic surface. Alternatively, in the case of utensils whose body presents an exterior non-metallic surface (for example, an exterior enamelled surface) the handle is usually connected to said exterior surface by screws or other mechanical fixing means.

The drawback of the handle-body union made by means of screws or other similar mechanical connecting means is that the union may work loose during the useful life of the kitchen utensil. In fact, it is common to see in a large number of kitchen utensils how the handles oscillate in relation to the body, giving an impression of poor quality and, most importantly, impacting on safety when the utensil is used.

For example, the utensils shown in CH319514 or FR1172282 comprise fixing elements that connect a handle to the body of the utensil in such a way that the handle could become loose throughout the utensil's lifetime. The fixing elements are based mainly on threaded connections arranged substantially perpendicular to the outer surface of the utensil (i.e. in parallel to the handle); this solution has proved to be improvable because the loads supported by the handle are perpendicular to the handle and therefore could favour unscrewing of the threaded connections.

The present invention aims to offer a connection system between the body and a handle of a utensil, where said system comprises the connection of screws or other mechanical fixing means, and where said system guarantees the correct and lasting tightening of the fixing means throughout the useful life of the utensil.

### Brief description of the invention

It is an object of this invention to provide a kitchen utensil provided with a body and at least one handle connected to said body by means of an inventive connection system. Of course, said kitchen utensil may additionally comprise other handles connected by means of other different connection systems.

In such a connection system between the body and a handle of a kitchen utensil, the handle is provided with a front surface designed to be seated substantially on the exterior surface of the body, and some fixing means exert such a force on the handle and the body that they cause the front surface of the handle to slide slightly on the exterior surface of the body and to be tightened on said exterior surface, thereby creating a wedge effect between both surfaces that helps prevent the fixing means from working loose. In other words, by means of the connection system of the invention, the tightening between the handle and the body becomes greater as the fixing means are gradually inserted, which helps guarantee that when the fixing means are completely connected they will not eventually loosen up.

The fixing means are preferably mechanical, and within this type, preferably screws. In a particularly advantageous embodiment of the utensil, the fixing means may be accessed from the exterior of the handle, in such a way that in the event that they are screws, the screws are visible from the exterior of the utensil.

The invention may be applied very advantageously to kitchen utensils in which the exterior surface of the body is enamelled, although its application to other kitchen utensils of other materials is also contemplated.

### Brief description of the figures

Details of the invention may be seen in the accompanying non-limiting drawings:
- Figure 1 shows a perspective of an embodiment of a body of a kitchen utensil provided with the inventive connection system.
- Figure 2 shows a perspective of an embodiment of a handle of a kitchen utensil provided with the inventive connection system.
- Figure 3 shows a cross-sectional side view of a kitchen utensil that comprises the handle and the body of the preceding figures, connected to each other by means of said preferred embodiment of the inventive connection system.

### Detailed description of the invention

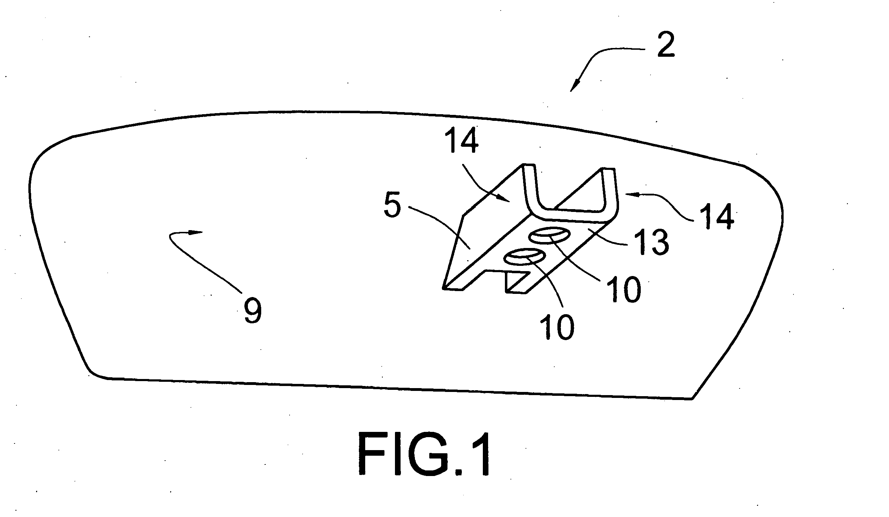

Figure 1 shows a perspective of an embodiment of a body (2) of a kitchen utensil provided with the inventive connection system. The body (2) has an exterior surface (9) from which, in the embodiment of the figure, a protruding element (5) projects outwardly. The protruding element (5) has a U-shaped cross-section, i.e. is provided with an intermediate face (13) and two lateral faces (14). In the embodiment in the figures, the fixing means are two screws that are to be connected to two threaded holes (10) present on the intermediate face (13) of the protruding element (5).

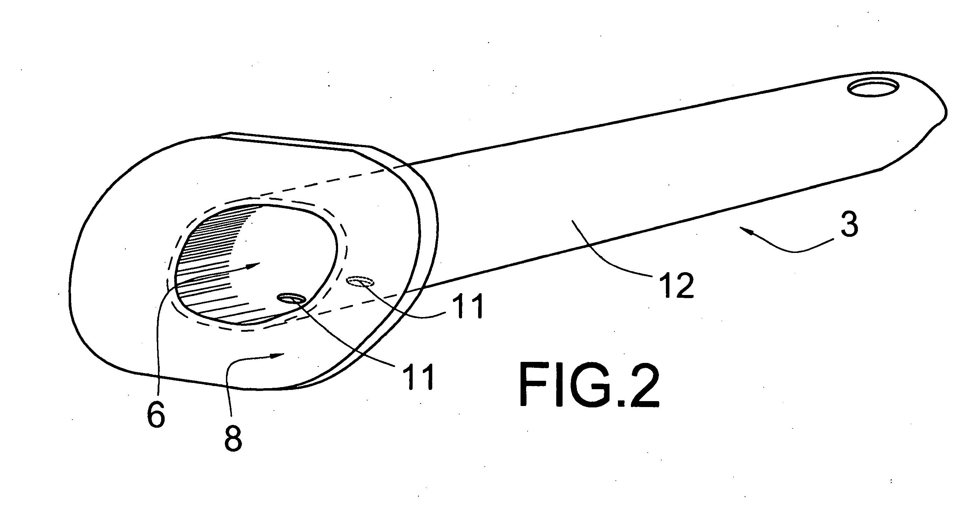

Figure 2 shows a perspective of an embodiment of a handle (3) of a kitchen utensil provided with the inventive connection system. The handle (3) comprises a front surface (8) designed to enter into contact with the exterior surface (9) of the body (2) of Figure 1. Said front surface (8) preferably presents a geometry (curvature, dimensions, etc.) that is substantially the same to the exterior surface (9) of the body (2) of the Figure 1. The handle (3) comprises an elongated gripping area (12) provided with an interior cavity (6) designed to receive the protruding element (5) of the body (2) of Figure 1. On one of its faces, the handle (3) comprises two holes (11) which, once the interior cavity (6) has received the protruding element (5), coincide approximately with the threaded holes (10) of the protruding element (5) to enable the connection of the screws.

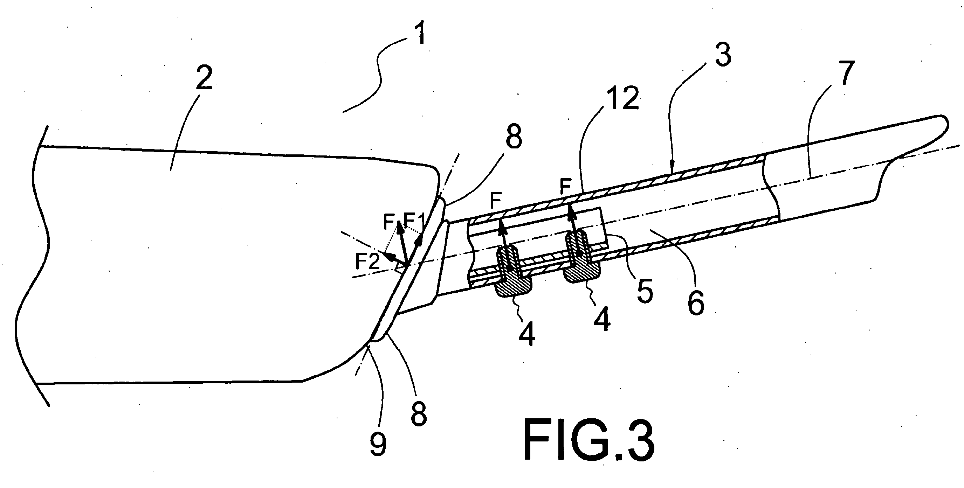

Figure 3 shows a cross-sectional side view of a kitchen utensil (1) that comprises the body (2) of Figure 1 and the handle (3) of Figure 2, connected to each other by means of the preferred embodiment of the inventive connection system based on the use of two screws (4), which was already introduced in the description of the preceding figures. As can be seen in the figure, the screws (4) exert a force (F) on the rest of the elements, where said force (F) may be broken down into a tangential component (F1) and a component which is orthogonal (F2) to the exterior surface (9) of the body (2). As can be seen in the figure, the dimensions of the protruding element (5) of the body (2) and the interior cavity (6) of the handle (3) are such that when both elements (5, 6) are assembled there is not a tight fitting but a slight looseness between them (5, 6). When the protruding element (5) is inserted in the interior cavity (6), the screws (4) are fitted and the tightening of the screws (4) begins, the front surface (8) is substantially seated on the exterior surface (9). Then, as the tightening of the screws (4) is completed, the tangential component (F1) of the force (F) causes a slight surface displacement of the front surface (8) of the handle (3) in relation to the exterior surface (9) of the body (2), and the orthogonal component (F2) of the force (F) causes the tightening of the handle (3) against the exterior surface (9) of the body (2). This combination of a slight surface displacement and a slight tightening of two surfaces (8, 9) which at first were substantially seated creates a wedge effect, i.e. an additional tightening between both surfaces (8, 9) that is proven to contribute to the gripping of the screws (4) during the useful life of the kitchen utensil (1).

As can be seen in the figure, in the present embodiment the screws (4) may be accessed from the exterior of the handle (3).

The invention is feasible with one or more screws (4), although the use of two screws (4) advantageously results in a compromise solution between the tightening that is achieved and the number of fixing means to be used.

## Claims

1. Kitchen utensil (1), which comprises a body (2) and at least one handle (3) connected to the body (2) by means of a connection system, where said connection system comprises at least one fixing means (4) to connect the handle (3) to the body (2), where the body (2) comprises an exterior surface (9), **characterised in that**:
- the handle (3) comprises a front surface (8) in order to enter into contact with the exterior surface (9) of the body (2),
- the body (2) comprises a U-shaped cross-sectional protruding element (5) comprising an intermediate face (13) and two lateral faces (14), and the fixing means (4) connect the handle (3) to the intermediate face (13) of the protruding element (5), the fixing means (4) being accessible from the exterior of the handle (3),
- the fixing means (4) are suitable to exert a force (F) on the protruding element (5), where said force (F) may be broken down into a tangential component (F1) and a component orthogonal (F2) to the exterior surface (9) of the body (2), so that
- when the action of the fixing means (4) begins, the front surface (8) is seated on the exterior surface (9), and when the fixing means (4) is connected, the tangential component (F1) of the force (F) causes a slight surface displacement of the front surface (8) of the handle (3) in relation to the exterior surface (9) of the body (2), and the orthogonal component (F2) of the force (F) causes the tightening of the handle (3) against the exterior surface (9) of the body (2).

2. Kitchen utensil (1) in accordance with claim 1, **characterised in that** the front surface (8) and the exterior surface (9) present substantially the same geometry.

3. Kitchen utensil (1) in accordance with claim 1, **characterised in that** the protruding element (5) is housed in an interior cavity (6) of the handle (3).

4. Kitchen utensil (1) in accordance with claim 1, **characterised in that** the fixing means (4) is mechanical.

5. Kitchen utensil (1) in accordance with claim 4, **characterised in that** the fixing means (4) is a screw.

6. Kitchen utensil (1) in accordance with claim 5, **characterised in that** it comprises two screws.

## Patentansprüche

1. Küchenutensil (1), das ein Gehäuse (2) und mindestens einen Griff (3) umfasst, der mit dem Gehäuse (2) mit Hilfe eines Verbindungssystems zusammengefügt ist, wobei besagtes Verbindungssystem mindestens ein Befestigungsmittel (4) umfasst, um den Griff (3) mit dem Gehäuse (2) zu verbinden, wobei das Gehäuse (2) eine äußere Oberfläche (9) umfasst, die durch Folgendes **gekennzeichnet** ist:
- der Griff (3) umfasst eine vordere Oberfläche (8), die dazu dient, den Kontakt mit der äußeren Oberfläche (9) des Gehäuses (2) herzustellen,
- das Gehäuse (2) umfasst ein vorspringendes Element (5) mit einem U-förmigen Querschnitt, wobei dieses Element (5) umfasst eine Zwischenoberfläche (13) und zwei seitliche Flächen (14), und das Befestigungsmittel (4) verbindet den Griff (3) mit der Zwischenoberfläche (13) des vorspringenden Elements (5), wobei das Befestigungsmittel (4) von der Außenseite des Griffs (3) aus erreichbar ist,
- das Befestigungsmittel (4) ist dazu geeignet, eine Kraft (F) auf das vorspringende Element (5) auszuüben, wobei besagte Kraft (F) in eine tangentiale Komponente (F1) und eine Komponente (F2), die senkrecht zur äußeren Oberfläche (9) des Gehäuses (2) steht, aufgegliedert werden kann, wobei:
- wenn die Wirkung des Befestigungsmittels (4) einsetzt, ist die vordere Oberfläche (8) auf der äußeren Oberfläche (9) gelegen, und wenn das Befestigungsmittel (4) den Kontakt herstellt, bewirkt die tangentiale Komponente (F1) der Kraft (F) eine leichte Verschiebung der vorderen Oberfläche (8) des Griffs (3) in Bezug auf die äußere Oberfläche (9) des Gehäuses (2), und die senkrechte Komponente (F2) der Kraft (F) bewirkt das Festziehen des Griffs (3) gegen die äußere Oberfläche (9) des Gehäuses (2).

2. Küchenutensil (1), in Übereinstimmung mit Anspruch 1, **dadurch gekennzeichnet, dass** die vordere Oberfläche (8) und die äußere Oberfläche (9) im Wesentlichen die gleiche Geometrie aufweisen.

3. Küchenutensil (1), in Übereinstimmung mit Anspruch 1, **dadurch gekennzeichnet, dass** das vorspringende Element (5) in einem inneren Hohlraum (6) des Griffs (3) untergebracht ist.

4. Küchenutensil (1), in Übereinstimmung mit Anspruch 1, **dadurch gekennzeichnet, dass** das Befestigungsmittel (4) mechanisch ist.

5. Küchenutensil (1), in Übereinstimmung mit Anspruch 4, **dadurch gekennzeichnet, dass** das Befestigungsmittel (4) eine Schraube ist.

6. Küchenutensil (1), in Übereinstimmung mit Anspruch 5, **dadurch gekennzeichnet, dass** es zwei Schrauben umfasst.

## Revendications

1. L'ustensile de cuisine (1) qui comprend un corps de récipient (2) et au moins une poignée (3) fixée sur le corps de récipient (2) au moyen d'un système de connexion, où ledit système de connexion comprend au moins un système d'ancrage (4) pour fixer la poignée (3) au corps du récipient (2), où le corps de récipient (2) comprend une surface extérieure (9), **caractérisée en ce que**:
- la poignée (3) comprend une surface frontale (8) qui entre en contact avec la surface extérieure (9) du corps de récipient (2),
- le corps de récipient (2) comprend un élément saillant (5) avec une coupe transversale en forme de U, comprenant une face intermédiaire (13) et de deux faces latérales (14), et le système d'ancrage (4) fixe la poignée (3) à la face intermédiaire (13) de l'élément saillant (5), le système d'ancrage (4) étant accessible depuis l'extérieur du poignée (3),
- le système d'ancrage (4) est prévu pour exercer une force (F) sur l'élément saillant (5), sur lequel ladite force (F) peut être bloquée sur une composante tangentielle (F1) et sur une composante orthogonalle (F2) par rapport à la surface extérieure (9) du corps de récipient (2), de manière à ce que
- lorsque l'action du système d'ancrage (4) se produit, la surface frontale (8) s'encastre dans la surface extérieure (9), et au moment où le système d'ancrage (4) est connecté, la composante tangentielle (F1) de la force (F) entraîne un léger déplacement de la surface de la surface frontale (8) de la poignée (3) par rapport à la surface extérieure (9) du corps de récipient (2), et la composante orthogonalle (F2) de la force (F) entraîne le resserrement de la poignée (3) contre la surface extérieure (9) du corps de récipient (2).

2. L'ustensile de cuisine (1), conformément à la revendication 1, est **caractérisé par le fait que** la surface frontale (8) et la surface extérieure (9) présentent substantiellement la même géométrie.

3. L'ustensile de cuisine (1), conformément à la revendication 1, est **caractérisé par le fait que** l'élément saillant (5) est logé à l'intérieur d'une cavité (6) de la poignée (3).

4. L'ustensile de cuisine (1), conformément à la revendication 1, est **caractérisé par le fait que** le système d'ancrage (4) est mécanique.

5. L'ustensile de cuisine (1), conformément à la revendication 4, est **caractérisé par le fait que** le système d'ancrage (4) est une vis.

6. L'ustensile de cuisine (1), conformément à la revendication 5, est **caractérisé par le fait qu'**il comprend deux vis.
